Europäisches Patentamt

(19) European Patent Office

Office européen des brevets

(11) Publication number: **0 315 596**
**A2**

(12) **EUROPEAN PATENT APPLICATION**

(21) Application number: **88830447.4**

(22) Date of filing: **25.10.88**

(51) Int. Cl.⁴: **F 16 D 25/14**

(30) Priority: **02.11.87 IT 6792487**

(43) Date of publication of application:
**10.05.89 Bulletin 89/19**

(84) Designated Contracting States:
**AT CH DE ES FR GB LI**

(71) Applicant: **SAME S.p.A.**
**Viale F. Cassani, 14**
**I-24047 Treviglio Bergamo (IT)**

(72) Inventor: **Paggi, Bruno**
**c/o Same S.p.A Viale F. Cassani, 14**
**I-24047 Treviglio (IT)**

(74) Representative: **Buzzi, Franco et al**
**c/o Jacobacci-Casetta & Perani S.p.A. Via Alfieri, 17**
**I-10121 Torino (IT)**

(54) **A hydraulic circuit for operating powershift friction clutches for tractor gearboxes.**

(57) A hydraulic operating circuit for friction power-shift clutches (1a-2b) for tractor gearboxes, in which the hydraulic actuators (2) of the clutches are operatively associated with respective valve units (13, 18) which are connected in series and are operated by electronically-controlled piloting means adapted to achieve the combined engagement and disengagement of the clutches for effecting changes of speed ratio without interrupting the transmission of torque. The circuit enables the simultaneous modulation of several clutches by a single electronically-controlled, proportional pressure reducing valve (20), the pressure of the remaining clutches being kept unchanged.

The proportional valve (20) enables the piloting of the bringing together of the friction discs of the clutches, the modulation and the maintenance of the pressure.

FIG. 1

EP 0 315 596 A2

Bundesdruckerei Berlin

## Description

### A hydraulic operating circuit for friction power-shift clutches for tractor gearboxes

The present invention relates to hydraulic operating circuits for friction power-shift clutches for tractor gearboxes, in which the friction clutches are provided with respective friction discs and respective hydraulic actuators with which are operatively associated respective valve units connected in series and operated by electronically-controlled piloting means which are adapted to achieve the combined engagement and disengagement of the clutches to effect changes of speed ratio without interrupting the transmission of torque.

The object of the present invention is to produce a hydraulic circuit of the type defined above, which is constituted by a relatively small number of components and is adapted to enable the simultaneous modulation of several clutches, the pressures of the remaining clutches being kept unchanged.

The hydraulic operating circuit according to the invention is characterised in that it comprises:
- a low-pressure supply line which can be connected to the clutch actuators through respective first sequence valves,
- a first high-pressure supply line which can be connected to the clutch actuators through respective electronically-controlled on-off valves and the first sequence valves and in which is situated a single electronically-controlled, proportional pressure reducing valve by means of which the first sequence valves are piloted, a non-return valve being interposed between each on-off valve and the proportional valve, and the on-off valves controlling communication between the first sequence valves and a discharge line,
-a second high-pressure supply line connected to the clutch actuators through respective second sequence valves piloted by the pressure of the respective actuators;
- the proportional pressure reducing valve being adapted to supply the actuator of the clutch which is to be engaged according to a sequence that provides for an initial stage of bringing together of the friction discs, in which the actuator is supplied by the low-pressure line and also progressively by the first high-pressure line, an intermediate stage of modulation of the pressure, in which the actuator is supplied entirely by the first high-pressure line, and a final stage of maintenance of the working pressure, in which the actuator is supplied by the second high-pressure line and the respective non-return valve prevents its communication with the proportional pressure reducing valve.

The invention will now be described in detail with reference to the appended drawings, provided purely by way of non-limiting example, in which:

Figure 1 shows the layout of a hydraulic operating circuit according to the invention,

Figure 2 shows a part of Figure 1 on an enlarged scale, and

Figure 3 is a graph which shows the way in which the circuit operates during a modulated changeover of the two clutches.

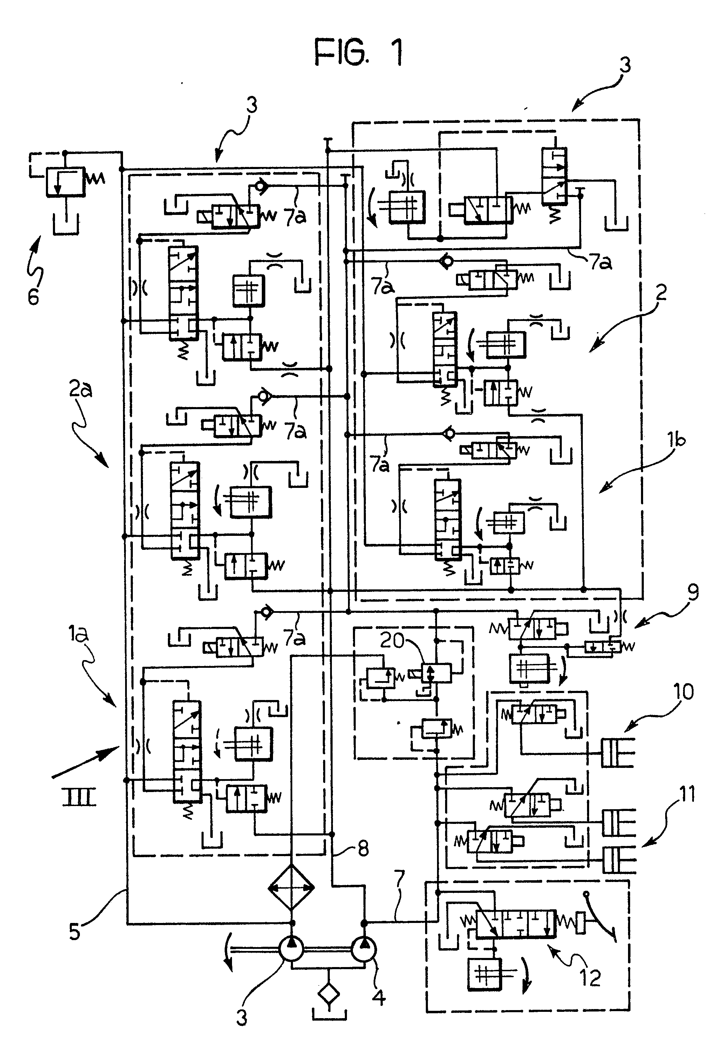

Figure 1 shows the layout of a circuit for operating a series of friction power-shift clutches for tractor gearboxes. The embodiment illustrated relates to a gearbox which is provided with two units, each having three speed ratios and therefore three friction clutch units with respective valve members, indicated 1a, 2a. 3a and 1b, 2b, 3b.

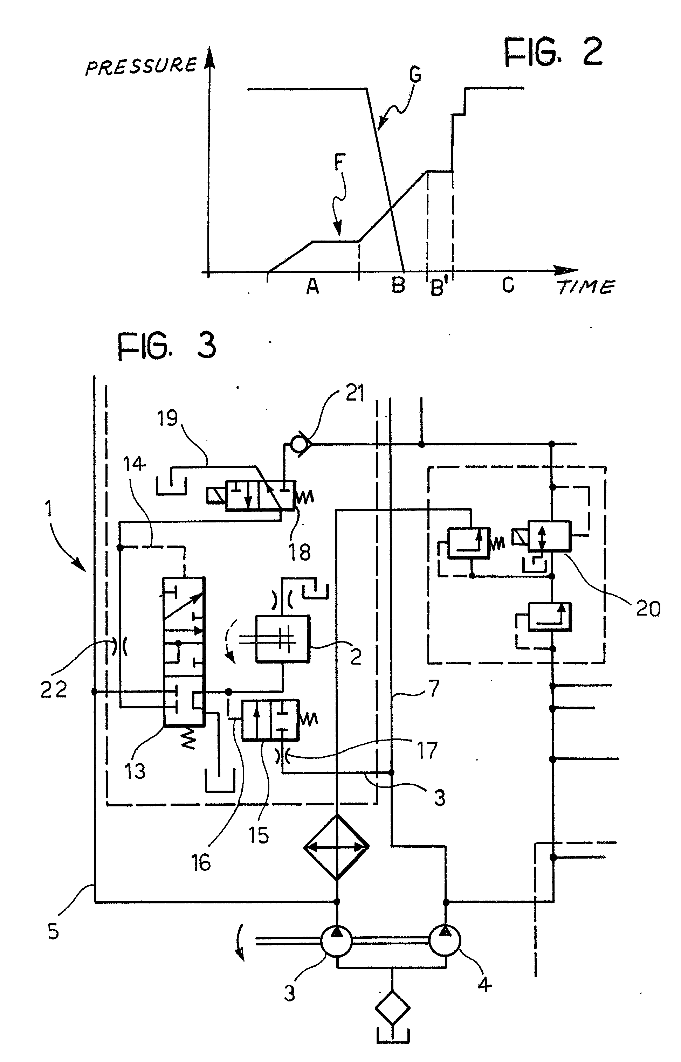

The general characteristics of friction clutches are generally known and will not therefore be described in detail. Moreover, the three units 1a, 2a, 3a and 1b, 2b are completely identical to each other and the following description therefore refers to the unit 1a shown in greater detail in Figure 2 but is also applicable to the other units, except for the unit 3b which will be described in detail below.

For the purposes of the present invention, it is sufficient to state that the friction clutch of each unit includes, in known manner, respective friction discs, not illustrated, with a cooperating a hydraulic actuator which causes the engagement and disengagement of the clutch and thrust chamber of which is indicated 2.

Two hydraulic pumps 3,4, having a high delivery at low pressure and a low delivery at high pressure respectively, provide for the supply of the thrust chambers 2.

The pump 3 is connected in series with the five units 1a-2b by means of a low-pressure supply line 5 which also supplies the lubrication circuit 6 of the tractor gearbox, and the pump 4 is also connected in series with the units 1a-2b through first and second high-pressure supply lines 7, 8 respectively.

The second high-pressure line 7 also supplies the other hydraulic units normally fitted to the tractor, particularly a unit 9 for operating the power take-off, a unit 10 for operating the engagement and disengagement of the four-wheel drive, two units 11 for controlling the locking and unlocking of the differentials, and a unit 12 for operating the main friction clutch of the tractor.

The connection between the low-pressure line 5 and each actuator 2 is achieved through a respective sequence valve 13 which is piloted hydraulically by the first high-pressure line 7, through a piloting line 14, in the manner explained below.

The second high-pressure line 8 is connected to the thrust chamber 2 of each actuator through respective second sequence valves 15 which are piloted hydraulically by the pressure within the chambers 2, through piloting lines 16. Upstream of each second sequence valve 15 is a calibrated constriction 17, whose function will be explained below.

The first high-pressure supply line 7 is connected to each of the first sequence valves 13 through branches 7a and respective solenoid on-off valves 18 which, in their de-energised condition, keep connections of the first sequence valves 13 to the discharge open. through a clutch-discharge branch 19. This done for all six units, except for the unit 3b.

A single electronically-controlled proportional pressure reducing solenoid valve 20 is connected in the first high-pressure supply line 7, upstream of the connection of this line to the six units 1a-3b, and is arranged to establish the predetermined modulation slopes for the various clutches, in the manner explained below.

A non-return valve 21 is connected between each on-off valve 18 and the proportional valve 20 to prevent back-flow towards the proportional valve 20.

A calibrated constriction, indicated 22, is inserted in the first high-pressure line 7 between each first sequence valve 13 and the respective piloting line 14.

As will be made clear below the proportional pressure reducing valve 20 enables the simultaneous modulation of several clutches, achieving the supply of the actuators of the clutches which are to be engaged, in a progressive manner dependent on the pressure values reached in the thrust chambers 2 of the actuators and according to a sequence which provides for three successive stages of bringing together of the friction discs, of modulation of the pressure, and of maintenance of the working pressure, respectively. This sequence is achieved by the piloting of the sequence valves 13 and 15 once the preselected clutches have been activated by means of the respective on-off valves 18, which means that it is possible to effect the changeover modulation of several clutces simultaneously.

The electronic control of the proportional pressure reducing valve 20 is achieved by means of a generally conventional processing unit, not illustrated in the drawings, whereby the engagement and disengagement sequences are piloted by the valve 20 according to time/pressure settings which depend on the operating conditions of the tractor. These operating conditions, which are detected by means of conventional sensors, not illustrated, and transformed into electrical signals sent to the electronic control unit. are essentially as follows:
- initial speed ratio and final speed ratio,
- speed of the tractor
- rate of rotation of the engine
- temperature of the gearbox oil
- loading conditions of the machine
- permitted degree of comfort and wear
- range and direction of working.

The sequence will now be described below, in relation to the clutch unit 1a and with reference to the graph of Figure 3.

A - Bringing together of the friction discs

When the tractor operator manually operates the clutch engagement control, the electronic unit simultaneously activates the on-off valve 18 and initiates the modulation of the solenoid proportional valve 20. During this stage, the proportional valve 20 reaches the maximum position provided for the bringing together of the friction discs. As the pressure in the first high-pressure line 7 increases, the first sequence valve 13 is switched by means of the piloting line 14, so that the thrust chamber 2 of the clutch is put into communication with both the first high-pressure line 7 and the low-pressure line 5. In this condition, the time taken for the friction discs to be brought together is reduced, by virtue of the high delivery in play.

When the maximum closing pressure is reached, the first sequence valve 3 is automatically switched and communication between the low-pressure line 5 and the chamber 2 of the clutch actuator is cut off.

In the diagram of Figure 3, in which the curve F shows the pressure/time curve of the clutch unit 1a during its engagement. the stage of the bringing together of the friction discs is indicated bY the section A of the graph.

B) - Modulation slope

Upon the completion of the stage of bringing together of the friction discs, the electronic unit operates the proportional valve 20, establishing the predetermined modulation slope in dependence on the parameters processed by the unit. The position of the first sequence valve 13 remains such that the first high-pressure line B is kept in communication with the thrust chamber 2.

This stage is represented by the portion B of the curve F of Figure 2, at the end of which may be provided a stage of levelling out of the pressure at a constant value, indicated B' in the graph of Figure 2. This stage is regulated by the electronic processing unit and ends when the input and output shafts associated with the friction clutch are synchronised at the same rate of rotation.

C)- The establishment and maintenance of the working pressure

Upon the completion of stage B (or B'), the electronic control unit again operates the proportional valve 1, increasing the pressure in order to cause the opening of the second sequence valve 15 piloted by the line 16 and to put the second high-pressure line 8 into communication with the chamber of the actuator 2. Since the pressure of the line 8 is greater than that reached through the proportional valve 20 in the first high-pressure line 7, the non-return valve 21 is closed. In this situation, the pressure in the first line 7 can be varied at will by the electronic unit through of the proportional valve 20, in order to achieve the simultaneous engagement of other clutch units 1a-3b.

This stage is represented by section C of the curve F of Figure 2.

In the same drawing, the curve G shows the pressure/time trace during the disengagement of one of the other clutch units, achieved simultaneously with the engagement of the clutch unit la described above.

The disengagement stage provides for the switching of the on-off solenoid valve 18 to the position of opening of the discharge passage 19, causing a pressure drop which is made possible by virtue of the limitation of the supply delivery from the second line 8 to the thrust chamber 2 through the second sequence valve 15, due to the presence of the constriction 17. This pressure drop causes both the switching of the second sequence valve 15 so as to prevent communication between the line 8 and the thrust chamber 2, and the rapid switching of the first sequence valve 13 into the position in which the thrust chamber 2 is discharged to the passage 19. At this stage, the constriction 22 reduces the back-flow of oil during the switching of the sequence valve 13 to the rest position.

In this condition, the proportional valve 20 is disconnected from the circuit of the disengaged clutch unit and can therefore operate in order to engage the other clutches.

It is clear from the above that the single proportional pressure reducing valve 20 enables the simultaneous modulation of several clutches whilst the pressure of the remaining clutches is kept unchanged, enabling changes of speed ratios to be carried out according to the engagement/disengagement changeover shown in Figure 2, with several clutches engaged.

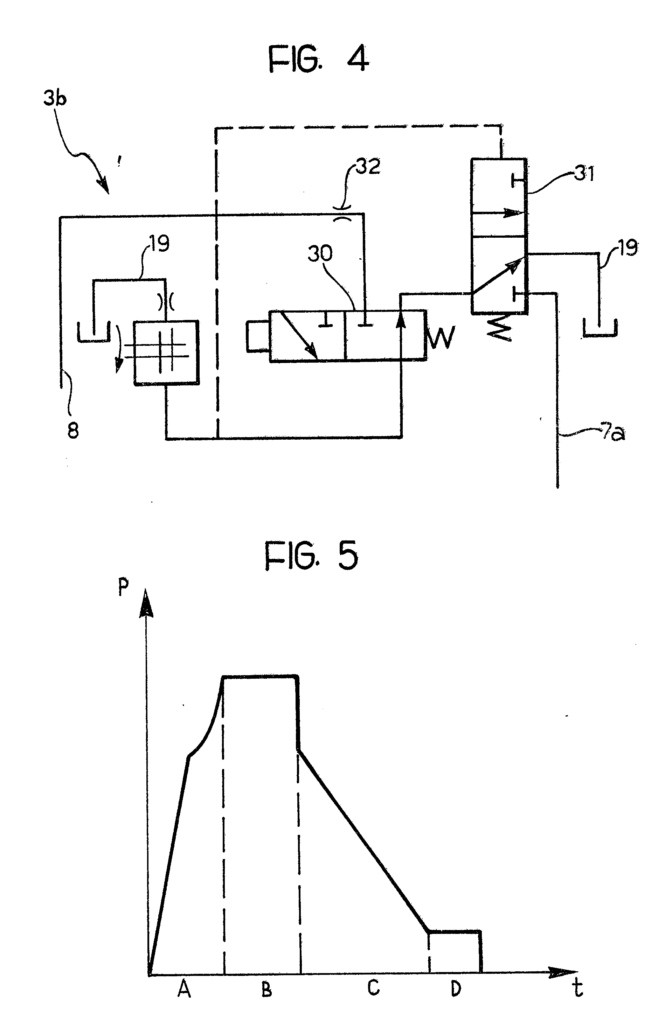

The clutch 3b, shown in greater detail in Figure 4, differs from the clutches 1a-2b in that it is of the normally-engaged type. In the absence of pressure in the thrust chamber of the respective actuator 2, the friction discs of the clutch are pressed against the counter discs as a result of the force created by thrust springs: under these conditions, the clutch 3b can transmit the maximum torque.

Consequently, when the clutch is to be disengaged, it is necessary to supply a flow of hydraulic fluid to the chamber of the actuator 2 in order to cause a pressure which can overcome the force generated by the thrust springs and effect the disengagement of the clutch. It is therefore necessary to carry out modulation at the pressure-reduction stage, in order to make the engagement of the clutch smooth and gradual.

As is clear from Figure 4, the actuator 2 of the clutch 3b is connected to the first high-pressure supply line 7 (and therefore to the electronically-controlled proportional pressure reducing valve 20) through a sequence valve 31 which is normally open to the discharge line 19. An electronically-controlled on-off valve 30 which controls communication between the actuator 2 and the high-pressure line 8 is situated between the actuator 2 and the safety valve 31 and a calibrated constriction 32 is associated therewith.

The stages of the operation of the clutch 3b will now be described below with reference to the graph of Figure 5.

### A) - Disengagement stage

The change from the engaged condition of the clutch (zero pressure) to the disengaged condition is made by the switching of the on-off solenoid valve 30. In this condition, the hydraulic fluid from the high-pressure line 8 passes into the thrust chamber of the actuator 2 of the clutch 3b, causing the separation of the friction discs and the consequent switching of the sequence valve 31 to the position which corresponds to the opening of the passage between the corresponding branch 7a of the high-pressure line 7 and the on-off solenoid valve 30. This stage is represented by the portion A of the graph of Figure 5.

### B) - Clutch disengaged

The high-pressure supply line 8 supplies the actuator 2 and the constriction 32 ensures that the pressure is maintained upstream thereof, even in the event of any large leakage downstream of the constriction 32. This stage is represented by the portion B of the graph.

### C) - Modulation stage

The clutch has to change from the disengaged condition (maximum pressure in the thrust chamber of the actuator 2) to the engaged condition (zero pressure in the actuator chamber 2).

This operation is carried out electronically by the switching of the proportional pressure reducing valve 20 to the condition which corresponds to the reaching of the maximum value of the pressure in the line 7 and therefore in the branch 7a thereof connected to the clutch 3b. When this pressure has been reached, the on-off valve 30 is operated electronically and switched to put the line 7 into communication with the thrust chamber of the actuator 2, so that the latter is supplied at the maximum pressure value reached in the line 7. It is therefore possible, still through the proportional pressure reducing valve 20, to modulate the pressure, by means of the electronic piloting to a value such as to ensure the achievement of the maximum torque that can be transmitted. This stage is indicated by the Portion C of the graph.

### D) - Clutch engaged

The pressure of the line 7 is further decreased from the running condition (equal rates of rotation of the input and output shafts of the clutch) by the proportional valve 20, with the consequent switching of the sequence valve 31, so as to cause the connection of the thrust chamber of the actuator 2 to the discharge and the cutting off of communication with the branch 7a.

In this condition, zero pressure in the chamber of the actuator 2 is ensured, whilst the proportional valve is disconnected from the circuit of the clutch 3b and can therefore modulate the other clutches, in the manner described above.

### Claims

1. A hydraulic operating circuit for friction power-shift clutches for tractor gearboxes, in which the friction clutches are provided with respective friction discs and respective hydraulic actuators with which are operatively associated respective valve units connected in series and operated by electronically-controlled piloting means which are adapted to achieve the combined engagement and disengagement of the clutches to effect changes of speed ratio without interrupting the transmission of torque, characterised in that it comprises:
- a low-pressure supply line (5) which can be connected to the actuators (2) of the clutches (1a-2b) through respective first sequence valves (13),

- a first high-pressure supply line (7) which can be connected to the clutch actuators (2) through respective electronically-controlled on-off valves (18) and the first sequence valves (13) and in which is situated a single electronically-controlled proportional pressure reducing valve (20) by means of which the first sequence valves (13) are piloted, a non-return valve (21) being interposed between each on-off valve (18) and the proportional valve (20), and the on-off valves (18) controlling communication between the first sequence valves (13) and a discharge line (19),

- a second high-pressure supply line (8) connected to the clutch actuators (2) through respective second sequence valves (15) piloted by the pressure of the respective actuators (2);

- the proportional pressure reducing valve (20) being adapted to supply the actuator of the clutch which is to be engaged according to a sequence that provides for an initial stage (A) of bringing together of the friction discs, in which the actuator (2) is supplied by the low-pressure line (5) and also progressively by the first high-pressure line (7), an intermediate stage (B) of modulation of the pressure, in which the actuator (2) is supplied entirely by the first high-pressure line (7), and a final stage (C) of maintenance of the working pressure, in which the actuator (2) is supplied by the second high-pressure line (8) and the respective non-return valve (21) prevents its communication with the proportional pressure reducing valve (20).

2. A circuit according to Claim 1, characterised in that at least one of the friction clutches (3b) is of the type which is normally engaged in the absence of pressure in the respective actuator (2), and in that the actuator (2) can be connected to the first high-pressure supply line (7) through a sequence valve (31) and an electronically-controlled on-off valve (30) which controls communication between the actuator (2) and the second high-pressure line (8).

# FIG. 1

# FIG. 2

# FIG. 3

# FIG. 4

# FIG. 5